# EUROPEAN PATENT APPLICATION

(11) **EP 3 598 415 A1**
(43) Date of publication of application: **22.01.2020**
(21) Application number: 18787577.8
(22) Date of filing: 16.04.2018
(51) Int. Cl.: G08G 1/16, B60R 21/00

(54) **VEHICLE DRIVING ASSISTANCE DEVICE**

(30) Priority: 20.04.2017 JP 2017083910; 20.04.2017 JP 2017083912
(71) Applicant: Mazda Motor Corporation, Aki-gun Hiroshima 730-8670 (JP)
(72) Inventor: OHMURA Hiroshi, Aki-gun Hiroshima 730-8670 (JP)
(74) Representative: Müller-Boré & Partner Patentanwälte PartG mbB
(86) International application number: PCT/JP2018/015674
(87) International publication number: WO 2018/194016

(57) **Abstract**

Disclosed is a vehicle driving support system which comprises an obstacle detection part configured to detect an obstacle, and a collision avoidance support part configured to, when the obstacle detection part detects the obstacle, start, at a notification start time, alert notification by an alert sound, wherein the collision avoidance support part further comprises: a target traveling course calculation part configured to calculate a first target traveling course L1 for allowing the vehicle to maintain traveling within a traveling road; and a predicted traveling course calculation part configured to calculate a predicted traveling course L3 based on a traveling behavior of the vehicle, wherein the collision avoidance support part is configured, when a difference between the first target traveling course L1 and the predicted traveling course L3 is equal to or less than a threshold, to delay the notification start time.

## Description

### TECHNICAL FIELD

The present invention relates to a vehicle driving support system for, e.g., when a vehicle which is traveling detects an obstacle existing ahead of the vehicle, supporting a driver of the vehicle to avoid a collision against the obstacle.

### BACKGROUND ART

In recent years, for a vehicle such as an automotive vehicle, there have been proposed, e.g., various techniques regarding collision avoidance support for supporting driving of a driver so as to avoid a collision against an obstacle such as a parked vehicle, in addition to techniques regarding driving support for supporting a driving manipulation by the driver in a manner similar to automated driving.

As one example, in Patent Document 1, there is described a collision mitigation apparatus configured to, when detecting an obstacle existing ahead of a vehicle by a camera sensor or a radar sensor, notify the driver by an alert sound or activate a brake, to avoid a collision against the obstacle.

Further, in the apparatus described in the Patent Document 1, when detecting an avoidance action by the driver for avoiding a collision against the obstacle, the timing to start the collision avoidance support (alert notification by an alert sound, etc.) is delayed. In this way, the apparatus described in the Patent Document 1 can suppress unwanted collision avoidance support which gives the driver a feeling of strangeness or a feeling of discomfort.

In the techniques regarding such collision avoidance support, the collision against the obstacle is safely avoided by performing the alert notification by an alert sound, the brake activation or the like, from several hundred meters before the obstacle, in a stepwise manner.

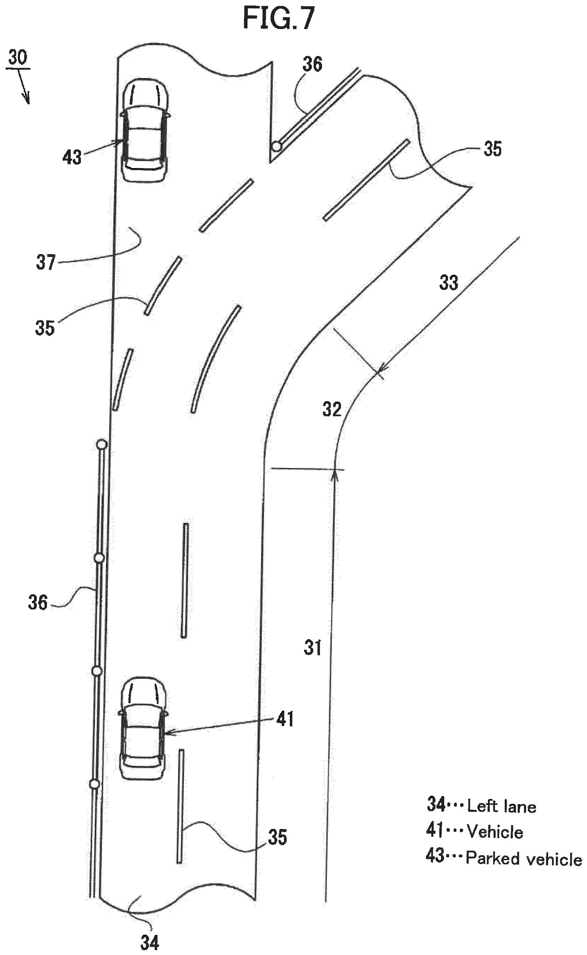

For example, FIG. 7 shows a road 30 having a main road, and a branch road 37 branching from the main road. The main road includes a straight section 31, a curve section 32, and a straight section 33. The branch road 37 is continuous with the straight section 31. In this case, a vehicle 41 which is traveling on the straight section 31 early detects, as an obstacle, a parked vehicle 43 existing on the branch road 37.

At this time, a driver intends to perform a driving manipulation for causing the vehicle 41 to travel from the straight section 31 toward the curve section 32. However, in the apparatus described in the Patent Document 1, the collision avoidance support (alert notification by an alert sound, etc.) is likely to be started before the driver starts the driving manipulation for vehicle traveling toward the curve section 32.

As above, if unwanted collision avoidance support intervenes before the driver's driving manipulation for vehicle traveling toward a safe traveling course, it will give the driver a feeling of strangeness or a feeling of discomfort. Thus, in the apparatus described in the Patent Document 1, there remains a need for improvement in terms of suppressing unwanted collision avoidance support.

### CITATION LIST

### [Patent Document]

Patent Document 1: JP 2014-222463A

### SUMMARY OF INVENTION

### [Technical Problem]

In view of the above problem, it is an object of the present invention to provide a vehicle driving support system capable of reliably suppressing unwanted collision avoidance support, without impairing a desired collision avoidance support function for supporting a driver to avoid a collision against an obstacle existing ahead of a vehicle.

### [Solution to Technical Problem]

According to a first aspect of the present invention, there is provided a vehicle driving support system which comprises: an obstacle detection part configured to detect an obstacle located ahead of a vehicle; and a collision avoidance support part configured to, when the obstacle detection part detects the obstacle, start collision avoidance support for avoiding a collision against the obstacle at a given timing; wherein the vehicle driving support system further comprises: a target traveling course calculation part configured to calculate a target traveling course which allows the vehicle to maintain traveling within a traveling road on which the vehicle is located; and a predicted traveling course calculation part configured to calculate a predicted traveling course based on a current traveling behavior of the vehicle, wherein the collision avoidance support part is configured to delay the given timing when a difference between the target traveling course and the predicted traveling course is equal to or less than a given value.

According to a second aspect of the present invention, there is provided a vehicle driving support system which comprises: an obstacle detection part configured to detect an obstacle located ahead of a vehicle; and a collision avoidance support part configured to, when the obstacle detection part detects the obstacle, start collision avoidance support for avoiding a collision against the obstacle at a given timing; wherein the vehicle driving support system further comprises: a preceding vehicle detection part configured to detect a preceding vehicle which is traveling ahead of the vehicle; a target traveling course calculation part configured to calculate a target traveling course which allows the vehicle to maintain traveling within a traveling road on which the vehicle is located; a second target traveling course calculation part configured to calculate a second target traveling course which allows the vehicle to follow a traveling trajectory of the preceding vehicle; a predicted traveling course calculation part configured to calculate a predicted traveling course based on a current traveling behavior of the vehicle; and a reference traveling course setting part configured to set, as a reference traveling course, one of the target traveling course and the second target traveling course according to a given condition, wherein the collision avoidance support part is configured to delay the given timing when a difference between the reference traveling course and the predicted traveling course is equal to or less than a given value.

The term "obstacle" means, e.g., a parked vehicle parked on the road, a pedestrian, or a fallen object left on the road.

The term "collision avoidance support" means, e.g., support based on alert notification to a driver of the vehicle by an alert sound or the like, support based on automatic braking, or support based on automatic steering.

The term "target traveling course" means, e.g., a traveling course which allows the vehicle to travel within the traveling road along the widthwise approximate middle of the traveling road, or a traveling course which allows the vehicle to avoid a parked vehicle located ahead of the vehicle, or the like. In the following description, the "target traveling course" will be referred to occasionally as "first target traveling course". Similarly, the "target traveling course calculation part" will be referred to occasionally as "first target traveling course calculation part".

The term "given condition" includes: a driving support mode selected by the driver among a plurality of driving support modes each for supporting a driving manipulation by the driver; detectability of the traveling road; and detectability of the preceding vehicle; and a combination of two or more of them.

The target traveling course is a traveling course which allows the vehicle to maintain traveling within the traveling road. Thus, the target traveling course is not likely to be a dangerous course which causes the vehicle to collide against a parked vehicle existing in the traveling road, or a dangerous course which causes the vehicle to travel beyond a demarcation line.

On the other hand, the second target traveling course is a traveling course which allows the vehicle to follow the traveling trajectory of the preceding vehicle. Thus, in a case where there is a parked vehicle ahead of the preceding vehicle, the second target traveling course is highly likely to be a safe traveling course which allows the vehicle to avoid a collision against the parked vehicle.

In the vehicle driving support system, by calculating the difference between the target traveling course and the predicted traveling course, it is possible to easily determine whether or not the predicted traveling course approximately follows the target traveling course which is highly likely to be a relatively safe traveling course.

Alternatively, in the vehicle driving support system, by calculating the difference between the reference traveling course (the target traveling course or the second traveling course) and the predicted traveling course, it is possible to easily determine whether or not the predicted traveling course approximately follows the reference traveling course which is highly likely to be a relatively safe traveling course.

That is, in the vehicle driving support system, when an obstacle lying ahead of the vehicle is detected, if the difference between the target traveling course (or the reference traveling course) and the predicted traveling course is small, it can be easily determined that the vehicle is traveling to approximately follow a relatively safe traveling course.

As one example, assume a situation where a branch road branches from a main road on which the vehicle is located, and extends ahead of the vehicle (along an extension of the main road), wherein a parked vehicle is parked on the branch road, and the vehicle is traveling along the target traveling course (or the reference traveling course) set along the main road, according to a driving manipulation by the driver. In this situation, as long as the difference between the target traveling course (or the reference traveling course) and the predicted traveling course is equal to or less than the given value, even if an obstacle (parked vehicle) located on the branch road is detected, it can be easily determined that a collision risk is low.

As above, in the vehicle driving support system, a determination of whether or not the given start timing of the collision avoidance support should be delayed can be adequately made based on the target traveling course (or the reference traveling course) and the predicted traveling course. Further, the collision avoidance support is not cancelled. Thus, at the delayed timing, the vehicle driving support system can immediately start the collision avoidance support as long as the obstacle is still detected ahead of the vehicle.

Therefore, the collision avoidance support system of the present invention can reliably suppress unwanted collision avoidance support, without impairing a desired collision avoidance support function for supporting the driver to avoid a collision against an obstacle existing ahead of the vehicle.

In a preferred embodiment of the present invention, the target traveling course calculation part is configured to calculate the target traveling course such that it allows the vehicle to travel along a widthwise approximate middle of the traveling road on which the vehicle is located.

According to the present invention, a safer traveling course within the traveling road can be calculated as the target traveling course. Thus, in the vehicle driving support system, the determination of whether or not the given start timing of the collision avoidance support should be delayed can be adequately made based on the safer target traveling course and the predicted traveling course.

In a preferred embodiment of the present invention, the vehicle driving support system comprises a support mode selection part configured to accept a selection manipulation by a driver to select one of a plurality of driving support modes each for supporting a driving manipulation by the driver, wherein the target traveling course calculation part is configured to sequentially calculate the target traveling course, irrespective of the driving support mode selected by the driver.

The "plurality of driving support modes" includes, e.g., a preceding vehicle following mode in which the vehicle is controlled to follow a preceding vehicle traveling ahead of the vehicle, an automatic speed control mode in which a traveling speed of the vehicle is controlled to be maintained at a predetermined constant value, a speed limiting mode in which the traveling speed is controlled not to exceed a speed limit, and a driving support mode in which a manipulation intended by the driver is prioritized.

In a case where, differently from the present invention, the target traveling course is not sequentially calculated in a certain one of a plurality of driving support modes, during transition from the certain driving support mode which does not involve the calculation of the target traveling course to one of the remaining driving support modes involving the calculation of the target traveling course, it is unable to promptly calculate a traveling road on which the vehicle is located, so that it takes longer time for calculating the target traveling course, and a load of a CPU or the like is likely to increase.

Compared with this, in the vehicle driving support system of the present invention, the target traveling course is sequentially calculated, irrespective of the driving support mode selected by the driver. Thus, in the vehicle driving support system of the present invention, e.g., when the driving support mode is switched, the target traveling course can be calculated seamlessly, and can be obtained with a higher degree of accuracy.

Further, e.g., even in a situation where a demarcation line or a safety barrier for identifying the traveling road is intermittently discontinued, the vehicle driving support system can easily calculate the target traveling course, based on information before the discontinuity, and a current traveling behavior of the vehicle.

Thus, the vehicle driving support system can calculate the target traveling course more reliably and seamlessly, while suppressing the load of the CPU or the like. For this reason, in the vehicle driving support system, the determination of whether or not the given start timing of the collision avoidance support should be delayed can be adequately made based on the target traveling course and the predicted traveling course.

Therefore, in the vehicle driving support system of the present invention, by sequentially calculating the target traveling course, the collision avoidance support can be started at a more adequate timing, when an obstacle is detected ahead of the vehicle. This makes it possible to more reliably suppress unwanted collision avoidance support.

In a preferred embodiment of the present invention, the vehicle driving support system comprises: a support mode selection part configured to accept a selection manipulation by a driver to select one of a plurality of driving support modes each for supporting a driving manipulation by the driver; and a traveling road detection part configured to detect the traveling road on which the vehicle is located, wherein the given condition includes: the driving support mode selected by the driver; detectability of the traveling road; and detectability of the preceding vehicle, and wherein the reference traveling course setting part is configured to set, as the reference traveling course, one of the target traveling course and the second target traveling course, based on the driving support mode selected by the driver, detectability of the traveling road, and detectability of the preceding vehicle.

In a situation where the traveling road on which the vehicle is located can be detected continuingly, the safety of the target traveling course is likely to become higher as compared to a situation where the traveling road cannot be detected continuingly. Similarly, in a situation where the traveling trajectory of the preceding vehicle can be detected continuingly, the safety of the second target traveling course is likely to become higher as compared to a situation where the traveling trajectory of the preceding vehicle cannot be detected continuingly.

On the other hand, the driving support mode selected by the driver can require, e.g., detection of the traveling road on which the vehicle is located, or detection of the preceding vehicle. Thus, the safety of traveling in the driving support mode selected by the driver is likely to be influenced by detectability of the traveling road, or detectability of the preceding vehicle.

In view of this, in the vehicle driving support system of the present invention, one of the target traveling course and the second target traveling course is set as the reference traveling course, based on the driving support mode selected by the driver, detectability of the traveling road, and detectability of the preceding vehicle, so that it is possible to set the reference traveling course with higher safety.

Therefore, in the vehicle driving support system of the present invention, the determination of whether or not the given start timing of the collision avoidance support should be delayed can be made safely and more adequately based on the safer reference traveling course, so that it is possible to more safely suppress unwanted collision avoidance support.

In a preferred embodiment of the present invention, the target traveling course calculation part is configured to calculate the target traveling course such that it allows the vehicle to travel along a widthwise approximate middle of the traveling road on which the vehicle is located, and wherein the given value is set to a larger value when the target traveling course is set as the reference traveling course than when the second target traveling course is set as the reference traveling course.

In the case where there is a parked vehicle ahead of the preceding vehicle, the second target traveling course is highly likely to be a safe traveling course which allows the vehicle to avoid collision against the parked vehicle. However, the safety of the second target traveling course largely relies on judgment of a driver who performs a driving manipulation of the preceding vehicle. Thus, even though the second target traveling course is a traveling course which allows the vehicle to avoid a collision against the obstacle, it is likely not to be a traveling course whose distance from the obstacle is sufficiently ensured, or a traveling course which does not go beyond a demarcation line. That is, in a possibility of the collision against the obstacle, the target traveling course which allows the vehicle to travel along the widthwise approximate middle of the traveling road can be lower than the second target traveling course which allows the vehicle to follow the traveling trajectory of the preceding vehicle.

For this reason, as compared with when the second target traveling course is set as the reference traveling course, a risk of the collision against the obstacle (e.g., a parked vehicle or an oncoming vehicle) becomes lower when the target traveling course is set as the reference traveling course, even if the difference between this reference traveling course and the predicted traveling course is somewhat large.

Therefore, the given value is set to a larger value when the target traveling course which allows the vehicle to travel along the widthwise approximate middle of the traveling road is set as the reference traveling course than when the second traveling course is set as the reference traveling course, so that it is possible to more reliably suppress unwanted collision avoidance support, without impairing a desired collision avoidance support function.

In a preferred embodiment of the present invention, when the driving support mode selected by the driver is a driving support mode for supporting a driving manipulation by the driver to follow the traveling trajectory of the preceding vehicle, and the second target traveling course is set as the reference traveling course, the given value is set to a smaller value than when the target traveling course is set as the reference traveling course.

When the preceding vehicle following mode for supporting a driving manipulation by the driver to follow the traveling trajectory of the preceding vehicle is selected, traveling according to the driving support is performed to avoid a collision against an obstacle lying ahead of the vehicle, along the traveling trajectory of the preceding vehicle.

In view of this, in the present invention, when the preceding vehicle following mode is selected, followability of the predicted traveling course with respect to the second target traveling course is more strictly determined. Thus, the vehicle driving support system can more strictly determine whether or not there is a possibility of deviating from a traveling course capable of safely avoiding a collision against the obstacle.

Thus, in the vehicle driving support system of the present invention, the determination of whether or not the given start timing of the collision avoidance support should be delayed can be more adequately made, so that it is possible to prevent erroneous suppression of the start of required collision avoidance support. Therefore, the vehicle driving support system of the present invention can satisfy both the prevention of erroneous suppression of required collision avoidance support, and the suppression of unwanted collision avoidance support.

In a preferred embodiment of the present invention, the vehicle driving support system comprises an avoidance action detection part configured to detect an avoidance action by the driver to avoid collision against the obstacle, wherein the collision avoidance support part is configured to increase the given value when the avoidance action detection part detects the avoidance action by the driver.

The "avoidance action" includes an accelerator pedal manipulation by the driver, a brake manipulation by the driver, and a steering manipulation by the driver.

In the vehicle driving support system of the present invention, when the avoidance action by the driver is detected, the given value is increased, thereby further delaying the given start timing of the collision avoidance support. Thus, when the driver visually recognizes an obstacle lying ahead of the vehicle and then starts the avoidance action for avoiding a collision against the obstacle, the vehicle driving support system of the present invention can further suppress unwanted collision avoidance support.

### [Effect of Invention]

The present invention can provide a vehicle driving support system capable of reliably suppressing unwanted collision avoidance support, without impairing a desired collision avoidance support function for supporting a driver to avoid a collision against an obstacle existing ahead of a vehicle.

### BRIEF DESCRIPTION OF DRAWINGS

FIG. 1 is a block diagram showing an internal configuration of a vehicle driving support system.
FIG. 2 is an explanatory diagram of a traveling course map.
FIG. 3 is an explanatory diagram of a first target traveling course.
FIG. 4 is an explanatory diagram of a second target traveling course.
FIG. 5 is an explanatory diagram of a predicted traveling course.
FIG. 6 is a flowchart showing a driving support processing process.
FIG. 7 is an explanatory diagram of a road having a branch road.
FIG. 8 is a flowchart showing a collision avoidance support processing process.
FIG. 9 is a flowchart showing the operation of reference traveling course setting processing.
FIG. 10 is an explanatory diagram of a difference between a reference traveling course and a predicted traveling course.
FIGS. 11(a) and 11(b) are time charts showing a relationship between a control signal output from an ECU and TTC.

### DESCRIPTION OF EMBODIMENTS

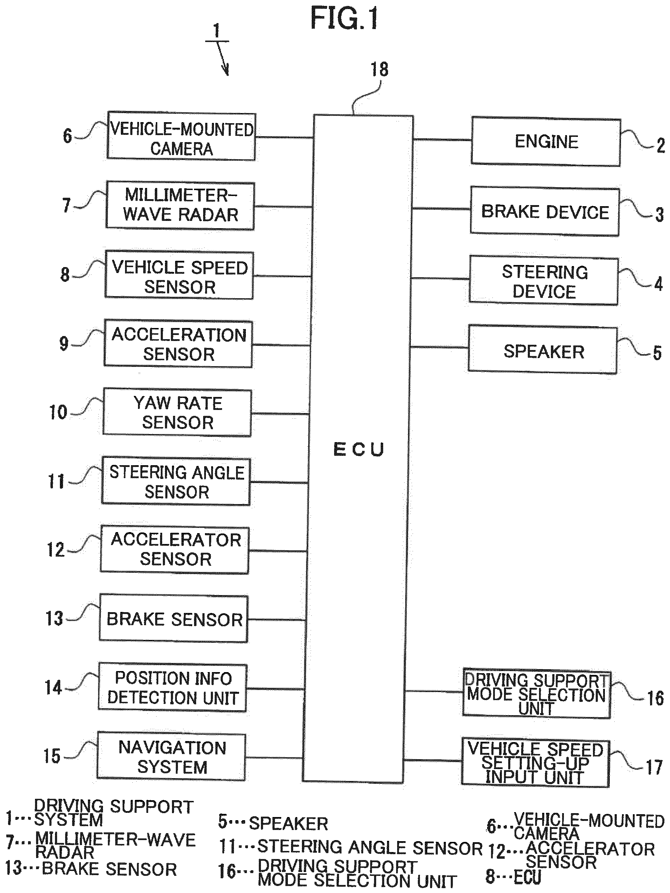

With reference to the drawings, one embodiment of the present invention will now be described. A vehicle driving support system 1 according to this embodiment is designed to, when an obstacle such as a parked vehicle is detected ahead of a vehicle such as an automotive vehicle, support a driver of the vehicle to avoid a collision against the obstacle. With reference to FIGS. 1 to 5, the vehicle driving support system 1 will be described.

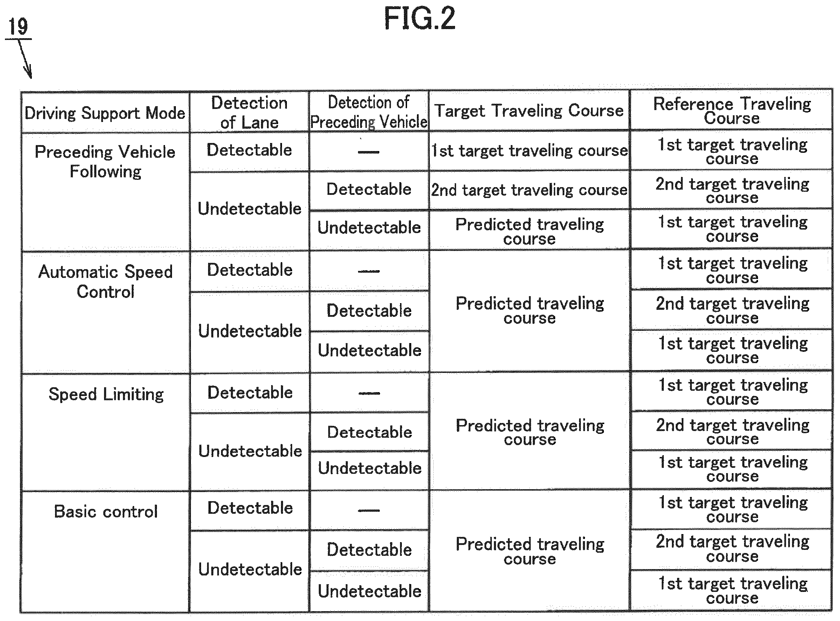

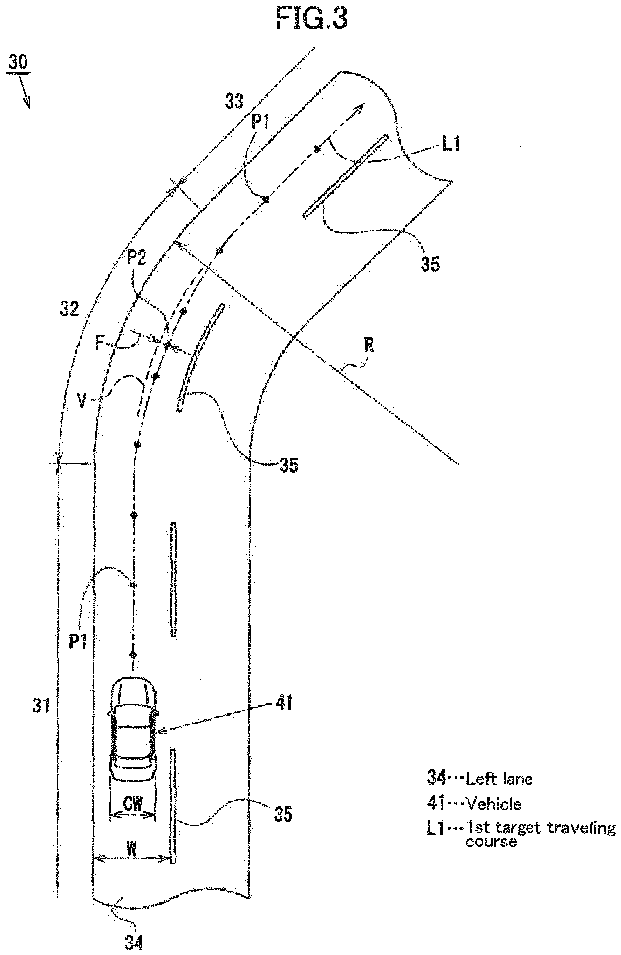

FIG. 1 is a block diagram showing an internal configuration of the vehicle driving support system 1, and FIG. 2 is an explanatory diagram of a traveling course map 19. FIG. 3, FIG. 4 and FIG. 5 are, respectively, an explanatory diagram of a first target traveling course L1, an explanatory diagram of a second target traveling course L2, and an explanatory diagram of a predicted traveling course L3.

As shown in FIG. 1, the vehicle driving support system 1 comprises: an engine 2; a brake device 3; a steering device 4; a speaker 5; a vehicle-mounted camera 6 and a millimeter-wave radar 7 each for acquiring information about a forward side of the vehicle; sensors (a vehicle speed sensor 8, an acceleration sensor 9, a yaw rate sensor 10, a steering angle sensor 11, an accelerator sensor 12, and a brake sensor 13) for detecting a traveling behavior of the vehicle; a position information detection unit 14 and a navigation system 15 each for identifying a current position of the vehicle; a driving support mode selection unit 16 configured to accept a driving support mode selection manipulation by the driver; a vehicle speed setting-up input unit 17 configured to accept a vehicle speed setting-up input manipulation by the driver; and an electronic control unit (hereinafter referred to as "ECU") 18 for controlling operations of the above components.

Although detailed illustration is omitted, the engine 2 is comprised of an engine body, a fuel injection device for supplying fuel to the engine body, a throttle valve for controlling the amount of fresh air to be supplied to the engine body, an ignition device for igniting a mixture of the fuel and the fresh air, and an engine control unit for controlling these components. This engine 2 is configured such that an engine output and an engine speed thereof are controlled by the engine control unit receiving an output signal from the ECU 18.

Although detailed illustration is omitted, the brake device 3 is comprised of a brake caliper, a brake actuator, and a brake control unit for controlling the brake actuator. This brake device 3 is configured such that a breaking force thereof is controlled by the brake control unit receiving an output signal from the ECU 18.

Although detailed illustration is omitted, the steering device 4 is comprises of a steering wheel to be subjected to a steering manipulation by the driver, a steering shaft, an electric motor for assisting the driver's steering manipulation through the steering shaft, and a steering control unit for controlling the electric motor. This steering device 4 is configured such that the electric motor and others are controlled to change a traveling direction of the vehicle, by the steering control unit receiving an output signal from the ECU 18.

The speaker 5 is disposed inside a passenger compartment of the vehicle, and has a function of outputting an alert sound based on an alert notification signal from the ECU 18 to notify the driver of an alert for avoiding a collision against an obstacle.

The vehicle-mounted camera 6 is disposed on, e.g., a passenger compartment-side upper portion of a front windshield glass, and has a function of taking an image of a view ahead of the vehicle, and a function of outputting the resulting image data to the ECU 18.

The millimeter-wave radar 7 is a radar device disposed, e.g., inside a front bumper, and has a function of radiating a millimeter wave as a radiation wave toward ahead of the vehicle, a function of receiving a reflective wave reflected by a preceding vehicle, a parked vehicle, a pedestrian or the like, and a function of outputting information obtained from the radiation wave and the reflective wave, as a radar signal, to the ECU 18.

The vehicle speed sensor 8 has a function of detecting, e.g., a rotational speed of a drive shaft coupled to road wheels, and a function of outputting the detected rotational speed, as a rotational speed signal, to the ECU 18.

The acceleration sensor 9 is a sensor disposed, e.g., inside the passenger compartment of the vehicle, and has a function of detecting a longitudinal acceleration along a longitudinal (forward-rearward) direction of the vehicle and a lateral acceleration along a vehicle-width (rightward-leftward) direction of the vehicle, and a function of outputting the detected longitudinal and lateral accelerations, as an acceleration signal, to the ECU 18.

The yaw rate sensor 10 is a sensor disposed, e.g., inside the passenger compartment of the vehicle, and has a function of detecting a yaw rate of the vehicle, and a function of outputting the detected yaw rate, as a yaw rate signal, to the ECU 18.

The steering angle sensor 11 has a function of detecting a steering angle of a steering wheel manipulated by the driver, and a function of outputting the detected steering angle, as a steering angle signal, to the ECU 18.

The accelerator sensor 12 is a sensor provided integrally with an accelerator pedal to be manipulated by the driver, and has a function of detecting an accelerator position as a depression amount of the accelerator pedal, and a function of outputting the detected accelerator position, as an accelerator position signal, to the ECU 18.

The brake sensor 13 is a sensor provided integrally with a brake pedal to be manipulated by the driver, and has a function of detecting a depression amount of the brake pedal, and a function of outputting the detected depression amount, as a brake signal, to the ECU 18.

The position information detection unit 14 is composed of, e.g., a GPS system and/or a gyroscope system, and has a function of detecting current position information indicative of a current position of the vehicle, and a function of outputting the detected current position information to the ECU 18.

The navigation system 15 has a function of storing therein map information, and a function of viewably display information indicative of the position of the vehicle, and roads, intersections, traffic signals and buildings around the vehicle, based on the stored map information and the current position information detected by the position information detection unit 14,

The driving support mode selection unit 16 is composed of a switch(s) and others provided inside the passenger compartment of the vehicle, and configured to allow the driver to select one of a plurality of driving support modes. The driving support mode selection unit 16 has a function of accepting the driving support mode selection manipulation by the driver, and a function of outputting the selected driving support mode, as driving support mode selection information, to the ECU 18.

The plurality of driving support modes include: a preceding vehicle following mode for causing the vehicle to travel while following a traveling trajectory of a preceding vehicle traveling which is traveling ahead of the vehicle; an automatic speed control mode for causing the vehicle to travel while maintaining a setup vehicle speed input and set-up by the driver, or a setup vehicle speed preliminarily set-up in the ECU 18; a speed limiting mode for causing the vehicle to travel while preventing a vehicle speed from exceeding a speed limit in accordance with a speed sign, or an setup speed input and set-up by the driver; and a basic control mode (so-called "off mode") in which no driving support for the driver is performed.

The vehicle speed setting input unit 17 has a function of accepting a vehicle speed setting-up input manipulation by the driver, and a function of outputting the input vehicle speed, as setup vehicle speed information, to the ECU 18.

The ECU 18 is composed of a hardware configuration such as a CPU and a memory, and a software configuration such as programs and data.

The ECU 18 has a function of acquiring a variety of information output from the vehicle-mounted camera 6, the millimeter-wave radar 7, the vehicle speed sensor 8, the acceleration sensor 9, the yaw rate sensor 10, the steering angle sensor 11, the accelerator sensor 12, the brake sensor 13, the position information detection unit 14, the navigation system 15, the driving support mode selection unit 16, and the vehicle speed setting input unit 17, a function of performing various processing based on the acquired variety of information, and a function of controlling respective operations of the engine 2, the brake device 3, the steering device 4, and the speaker 5.

Next, with reference to FIG. 2, a traveling course map 19 will be described. The traveling course map 19 is stored in the ECU 18, and represents a relationship among a driving support mode, a target traveling course, and a reference traveling course. The traveling course map 19 has a "driving support mode" field, a "detection of lane" field, a "detection of preceding vehicle" field, a "target traveling course" field, and a "reference traveling course" field. Information items in each of the "detection of lane" field, the "detection of preceding vehicle" field, the "target traveling course" field and the "reference traveling course" field are registered in association with the driving support modes in the "driving support mode" field.

In the "driving support mode" field, information items each indicative of a respective one of the driving support modes to be selected by the driver are registered. Specifically, the preceding vehicle following mode, the automatic speed control mode, the speed limiting mode and the basic control mode are registered in the "driving support mode" field, respectively, as "preceding vehicle following", "automatic speed control", "speed limiting" and "basic control".

In the "detection of lane" field, "detectable" as an information item indicative of a situation where a lane in which the vehicle is located is detected, and "undetectable" as an information item indicative of a situation where no lane can be detected, are registered in association with each of the driving support modes in the "driving support mode" field.

In the "detection of preceding vehicle" field, "detectable" as an information item indicative of a situation where a preceding vehicle traveling ahead of the vehicle is detected, and "undetectable" as an information item indicative of a situation where no preceding vehicle is detected, are registered in association with the "undetectable" in the "detection of lane" field. Further, "-" as an information item indicative of a situation where there is no relation with the detection of lane is registered in association with the "detectable" in the "detection of lane" field.

In the "target traveling course" field, an information item indicative of an optimal traveling course for a combination of information items in each set of corresponding sub-fields of the "driving support mode" field, the "detection of lane" field and the "detection of preceding vehicle" field is registered. One of a first target traveling course, a second target traveling course and a predicted traveling course is registered in each sub-field of the "target traveling course" field,

In the "reference traveling course" field, an information item indicative of a traveling course serving as a reference during determination of the after-mentioned alert notification start-setting time period. The alert notification start-setting time period is a time period for starting alert notification by an alert sound. In each sub-field of the "reference traveling course" field, one of the first target traveling course and the second target traveling course is registered according to a combination of information items in each set of corresponding sub-fields of the "driving support mode" field, the "detection of lane" field and the "detection of preceding vehicle" field and the "target traveling course" field.

Next, with reference to FIGS. 3 to 5, the first target traveling course, the second target traveling course and the predicted traveling course will be specifically described. As shown in FIGS. 3 to 5, a road 30 is a two-lane road consisting of: a straight section 31 extending approximately linearly; a curve section 32 gently curved from the straight section 31, and a straight section 33 extending approximately linearly from the curve section 32. Assume that a vehicle 41 is traveling in a left lane 34 of the road 30 from the straight section 31 toward the curve section 32.

Each of the first target traveling course, the second target traveling course and the predicted traveling course is a virtual traveling course during a time period from the present time through until a given time (e.g., 2 to 4 seconds) elapses, and is calculated based on a variety of information acquired from the vehicle-mounted camera 6, the millimeter-wave radar 7 and others.

As shown in FIG. 3, the first target traveling course L1 is a virtual traveling course set along a widthwise approximate middle of the left lane 34. More specifically, the first target traveling course L1 is set, in the straight section 31 and the straight section 33, to pass through the widthwise approximate middle of the left lane 34, and set, in the curve section 32, to pass through a slightly inner side (in-side) with respect to the widthwise middle of the left lane 34.

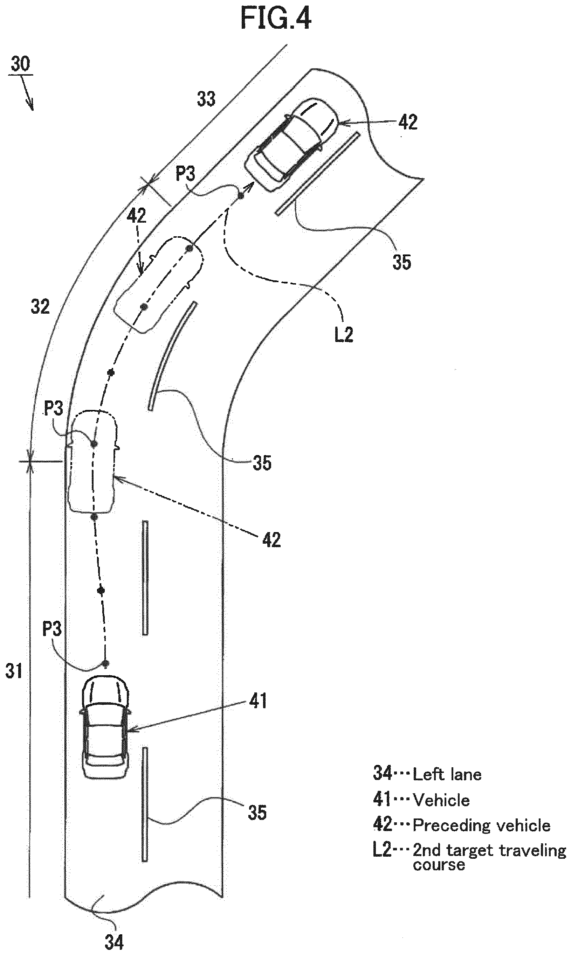

As shown in FIG. 4, the second target traveling course L2 is a virtual traveling course set along a traveling trajectory of a preceding vehicle 42 which is traveling ahead of the vehicle 41.

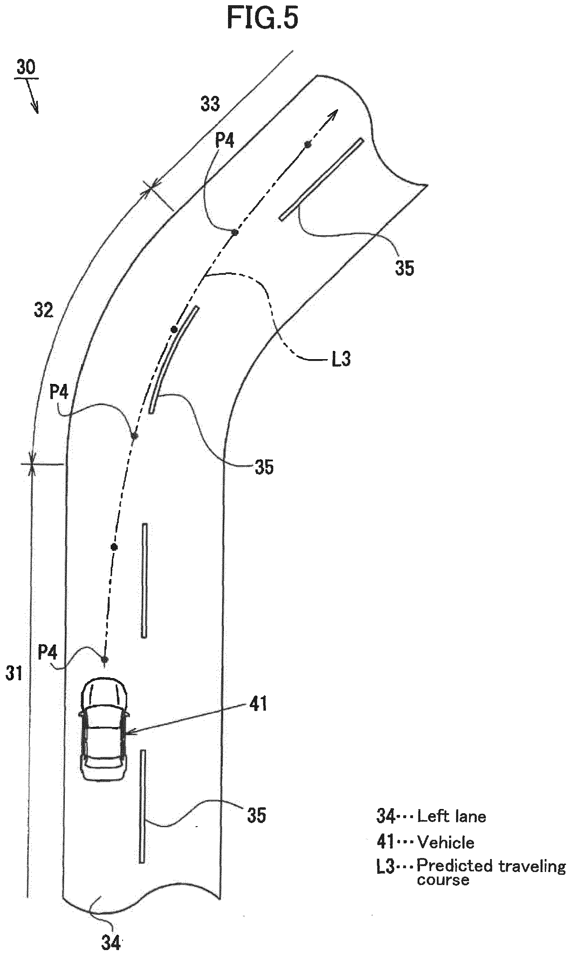

Further, as shown in FIG. 5, the predicted traveling course L3 is a predicted traveling course of the vehicle 41 calculated based on a traveling behavior of the vehicle 41 such as the vehicle speed, the steering angle and the yaw rate, etc.

Next, with reference to FIGS. 7 to 11, a driving support processing process and a collision avoidance support processing process to be executed by the vehicle driving support system 1 will be described. The driving support processing process is designed to support a driving manipulation by the driver according to the selected driving support mode. The collision avoidance support processing process is designed to support avoidance of a collision against an obstacle.

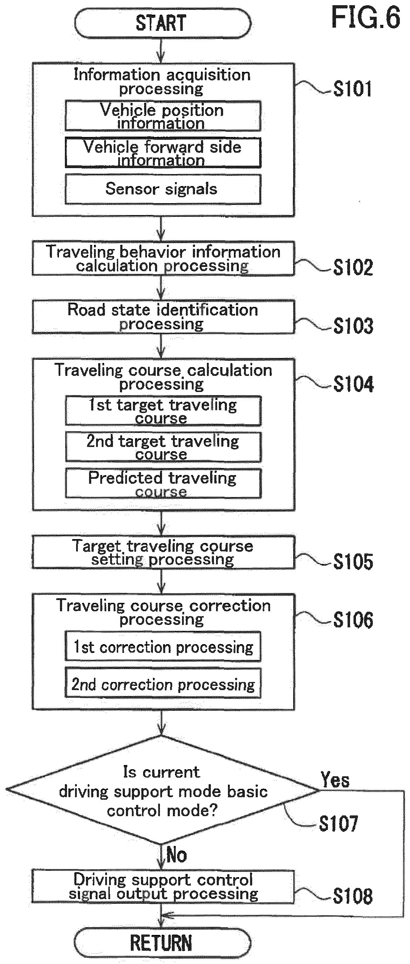

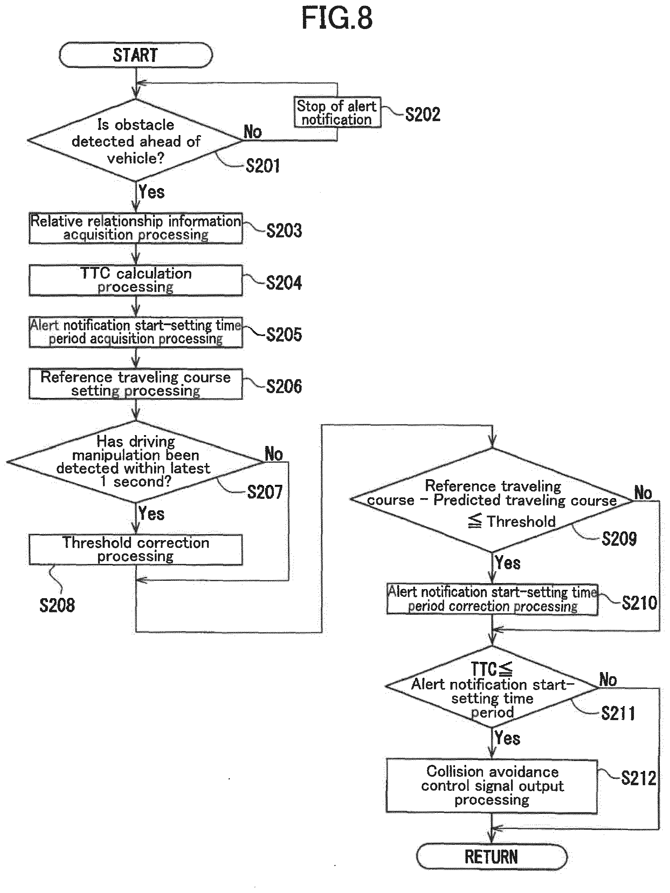

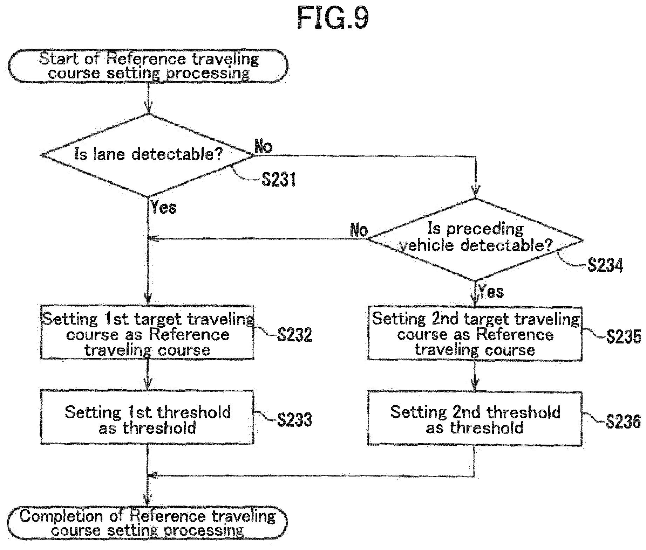

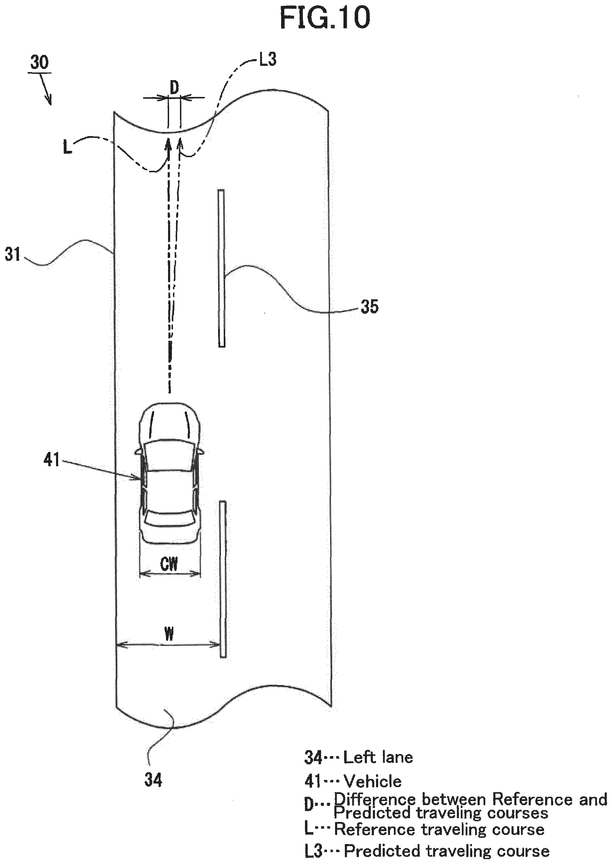

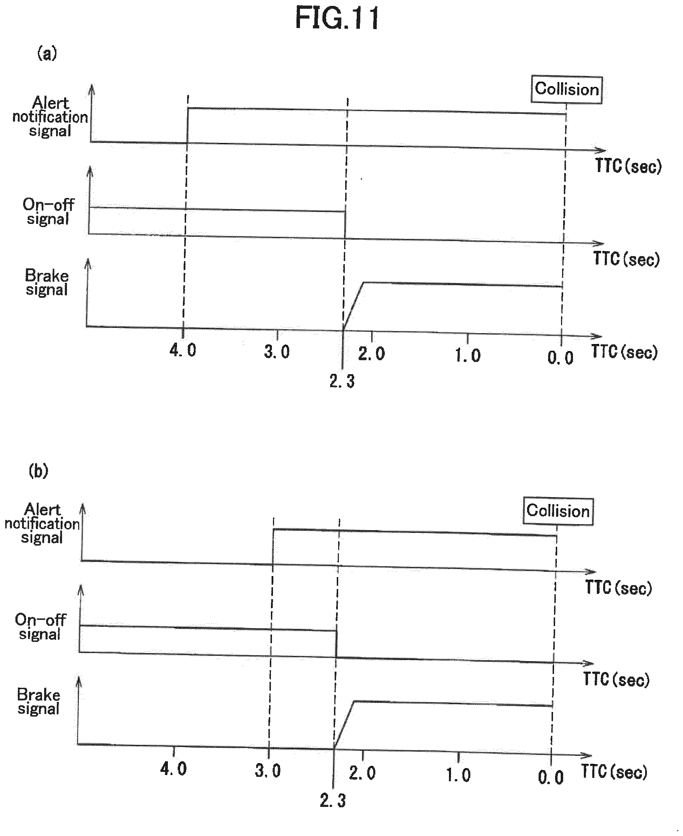

FIG. 6 is a flowchart showing the driving support processing process, and FIG. 7 is an explanatory diagram of the road 30 having the branch road 37. FIG. 8 is a flowchart showing the collision avoidance support processing process, and FIG. 9 is a flowchart showing a reference traveling course setting processing. FIG. 10 is an explanatory diagram of a difference between a reference traveling course L and the predicted traveling course L3, and FIGS. 11(a) and 11(b) are time charts showing a relationship between a control signal output from the ECU and TTC.

### < Driving Support Processing Process >

First of all, with reference to FIG. 6, the driving support processing process to be executed by the ECU 18 will be described. This driving support processing process is started just after start-up of the engine 2, and repeatedly executed until the engine 2 is stopped.

Upon start of the driving support processing process, the ECU 18 operates to start information acquisition processing of acquiring vehicle position information, vehicle forward side information and sensor signals (S101). Specifically, the ECU 18 operates to acquire, as the vehicle position information, the current position information output by the position information detection unit 14, and the map information from the navigation system 15.

Further, the ECU 18 operates to acquire, as the vehicle forward side information, the image date output by the vehicle-mounted camera 6, and the radar signal output by the millimeter-wave radar 7. In addition, the ECU 18 operates to acquire, as the sensor signals, signals output by the vehicle speed sensor 8, the acceleration sensor 9, the yaw rate sensor 10, the steering angle sensor 11, the accelerator sensor 12, and the brake sensor 13.

Subsequently, the ECU 18 operates to start traveling behavior information calculation processing of acquiring traveling behavior information indicative of the traveling behavior of the vehicle 41 (S102). Specifically, the ECU 18 operates to calculate, based on the sensor signals acquired through the information acquisition processing, current values of the vehicle speed, the accelerations, the steering angle, the yaw rate, the accelerator position, and the brake pedal depression amount, and temporarily store the calculated values as the traveling behavior information.

Upon calculation of the traveling behavior information, the ECU 18 operates to start road state identification processing of analyzing and identifying a road state on the forward side of the vehicle, based on the vehicle position information and the vehicle forward side information acquired in the step S101 (S103).

Specifically, the ECU 18 operates to identify a road shape in a space forward of the vehicle 41, based on the vehicle forward side information, and temporarily store the identified road shape as road shape information. In this process, the ECU 18 operates to analyze the image data acquired from the vehicle-mounted camera 6 to identify a demarcation line 35 on the road 30 and a safety barrier 36 as shown in FIGS. 3 and 7.

Then, the ECU 18 operates to identify widthwise opposed lane edges of the left lane 34 in which the vehicle 41 is located, from the demarcation line 35 and the safety barrier 36. Further, the ECU 18 operates to calculate, based on the identified widthwise opposed lane edges and the vehicle position information, a width W of the left lane 34, a curvature radius R (see FIG. 3) of the curve section 32, etc., and temporarily store the calculated data as the road shape information indicative of the road shape.

Here, in a case where the demarcation line 35 or the safety barrier 36 is intermittently discontinued, the ECU 18 operates to analogically calculate a road shape of a discontinued part of the demarcation line 35 or the safety barrier 36, based on the road shape, the map information, the vehicle speed, the steering angle, the accelerations, the yaw rate, etc., just before the discontinuity of the demarcation line 35 or the safety barrier 36.

Further, in the road state identification processing, the ECU 18 operates to identify a speed limit, a lighting state of a traffic light, and the like, based on the vehicle position information and the vehicle forward side information, and temporarily store the identified data as traffic regulation information.

In addition, the ECU 18 operates to temporarily store, as obstacle information, an obstacle identified based on the vehicle forward side information, and the position and others of the obstacle, and temporarily store, as preceding vehicle information, a preceding vehicle identified based on the vehicle forward side information, and a traveling trajectory and others of the preceding vehicle.

Here, when acquiring the obstacle information, the ECU 18 operates to identify, as an obstacle, a parked vehicle or pedestrian existing ahead of and within the range of about 200 m from the vehicle 41. For example, as shown in FIG. 7, in the situation where the parked vehicle 43 is located on the branch road 37 branching from the straight section 31 of the left lane 34 and extending approximately linearly, the ECU 18 operates to identify this parked vehicle 43 as an obstacle, irrespective of whether or not the vehicle 41 is driven toward the branch road 37.

Subsequently, the ECU 18 operates to start traveling course calculation processing of calculating the first target traveling course L1, the second target traveling course L2 and the predicted traveling course L3 (S104). Among them, each of the first target traveling course L1 and the predicted traveling course L3 is sequentially calculated, irrespective of the driving support mode selected by the driver. On the other hand, in a situation where the preceding vehicle 42 is being detected ahead of the vehicle 31, the second target traveling course L2 is sequentially calculated, irrespective of the driving support mode selected by the driver.

In order to calculate the first target traveling course L1, the ECU 18 calculates a predicted passing position of the vehicle 41 multiple times at a constant time interval from the present time, based on the road shape information acquired through the road state identification processing, and set the plurality of passing points as target passing points P1, P2 indicative of virtual passing positions of the vehicle 41, as shown in FIG. 3.

Here, although the road 30 has the branch road 37 branching from the straight section 31, the demarcation line 35 of the curve section 32 is provided such that it is continuous with the safety barrier 36 of the straight section 31 in which the vehicle is currently located, as shown in FIG. 7. Thus, with respect to the road 30 as shown in FIG. 7, the ECU 18 operates to set the plurality of target passing points P1, P2 on the left lane 34, instead of on the branch road 37.

The ECU 18 operates to set each of the target passing points P1 at the widthwise approximate middle of each of the straight section 31 and the straight section 33, as shown in FIG. 3, to allow a vehicle-width directional approximate center of the vehicle 41 to pass through the widthwise approximate middle of the left lane 34. On the other hand, in the curve section 32, the ECU 18 operates to set one target passing point P2 at a position offset from an approximate intermediate point of a circular arc V passing through the widthwise approximate middle, slightly toward the inner side (in-side) by a given offset amount F. Here, the given offset amount F is a value calculated based on the width W and the curvature radius R of the curve section 32, and the vehicle-width CW of the vehicle 41.

Then, the ECU 18 operates to set two or more additional target passing points P1 in the curve section 32 to smoothly connect the target passing points P1 in the straight section 31 and the target passing points P1 in the straight section 33 via the target passing points P2. Through the operation of connecting the target passing points P1, P2 in the above manner, the ECU 18 can calculate the first target traveling course L1.

In order to calculate the second target traveling course L2 as shown in FIG. 4, the ECU 18 operates to sequentially or successively calculate the position of the preceding vehicle 42 which is traveling ahead of the vehicle 41 and a relative speed of the preceding vehicle 42 with respect to the vehicle 41, based on the vehicle forward side information acquired through the information acquisition processing, and the traveling behavior information acquired through the traveling behavior information calculation processing, to acquire traveling trajectory information indicative of the traveling trajectory of the preceding vehicle 42.

Subsequently, the ECU 18 operates to calculate a passing position of the vehicle 41 overlapping with the traveling trajectory of the preceding vehicle 42, multiple times at a constant time interval from the present time, and set the calculated passing points as a plurality of target passing points P3 each indicative of a virtual passing position of the vehicle 41. Through operation of connecting the target passing points P3 set in the above manner, the ECU 18 can calculate the second target traveling course L2.

In order to calculate the predicted traveling course L3 as shown in FIG. 5, the ECU 18 operates to calculate the position of the vehicle 41 predicted based on the traveling behavior information acquired through the traveling behavior information calculation processing, multiple times at a constant time interval from the present time, and set the plurality of calculated passing points as target passing points P4 each indicative of a virtual passing position of the vehicle 41. Through operation of connecting the target passing points P4 set in the above manner, the ECU 18 can calculate the predicted traveling course L3.

After completion of the traveling course calculation processing (S104), the ECU 18 operates to start target traveling course setting processing of setting a target traveling course according to a current one of the driving support modes (S105). The ECU 18 operates to refer to the traveling course map 19, and, based on the current driving support mode, detectability of the lane and detectability of the preceding vehicle, set the traveling course registered in the "target traveling course" field, as the target traveling course corresponding to the current driving support mode.

For example, in a situation where the current driving support mode is the preceding vehicle following mode, and a preceding vehicle is detected although a lane in which the vehicle is located cannot be detected, the ECU 18 operates to set, based on the traveling course map 19, the second target traveling course L2 as the target traveling course corresponding to the current driving support mode.

On the other hand, in a situation where the current driving support mode is the automatic speed control mode, and the lane is detected, the ECU 18 operates to set the predicted traveling course L3 as the target traveling course corresponding to the current driving support mode, irrespective of detectability of the preceding vehicle.

After completion of the target traveling course setting processing (S105), the ECU 18 operates to start traveling course correction processing of correcting the set target traveling course (S106). Firstly, the ECU 18 operates to perform first correction processing of correcting the target traveling course, based on the traffic regulation information acquired through the road state identification processing. As one example, when the traffic light is "red", the target traveling course is corrected to a traveling course which allows the vehicle 41 to stop at a stop line.

Secondly, the ECU 18 operates to perform second correction processing of correcting the corrected target traveling course, based on the obstacle information acquired through the road state identification processing. As one example, when an obstacle is located ahead of the vehicle 41, the corrected target traveling course is further corrected to a traveling course which avoids a collision against the obstacle.

After completion of the traveling course correction processing (S106), the ECU 18 operates to determine whether or not the current driving support mode is the basic control mode (S107).

When the current driving support mode is not the basic control mode (S107: NO), the ECU 18 operates to start driving support control signal output processing (S108) to output control signals according to the current driving support mode to the engine 2, the brake device 3 and the steering device 4 so as to enable the vehicle 41 to travel along the corrected target traveling course. Then, the ECU 18 operates to return the processing flow to the step S101 and repeat the processing of the steps S101 to S108 until the engine 2 is stopped.

As one example, when the preceding vehicle following mode is selected, the ECU 18 operates to perform control of the engine 2, control of the brake device 3 and control of the steering device 4 so as to enable the vehicle 41 to travel along the corrected target traveling course, while maintaining an inter-vehicle distance according to the vehicle speed.

As another example, when the automatic speed control mode is selected, the ECU 18 operates to perform the control of the engine 2 and the control of the brake device 3 so as to enable the vehicle 41 to travel along the corrected target traveling course, while maintaining the setup vehicle speed.

Here, when the accelerator position signal output by the accelerator sensor 12, or the brake signal output by the brake sensor 13 are detected, the ECU 18 operates to perform the control of the engine 2 or the control of the brake device 3, according to the accelerator pedal depression amount or the brake pedal depression amount, i.e., by giving priority to the will of the driver.

Then, when the vehicle 41 catches up with a preceding vehicle existing ahead thereof, the ECU 18 operates to perform the control of the engine 2 and the control of the brake device 3 so as to enable the vehicle 41 to travel while maintaining an inter-vehicle distance according to the vehicle speed. Further, when the preceding vehicle moves away from the forward side of the vehicle 41, the ECU 18 operates to perform the control of the engine 2 and the control of the brake device 3 so as to enable the vehicle speed of the vehicle 41 to be returned to the setup vehicle speed again.

As yet another example, when the speed limiting mode is selected, the ECU 18 operates to perform the control of the engine 2 and the control of the brake device 3 so as to enable the vehicle 41 to travel along the corrected target traveling course, while maintaining a speed limit.

Here, when the accelerator position signal output by the accelerator sensor 12 is detected, the ECU 18 operates to perform the control of the engine 2 so as not to exceed the speed limit, even if the accelerator pedal depression amount is a value corresponding to a vehicle speed exceeding the speed limit.

On the other hand, when the current driving support mode is the basic control mode (S107: YES), the ECU 18 operates to return the processing flow to the step S101, and repeat the processing of the steps S101 to S108 until the engine 2 is stopped. In this case, the engine 2, the brake device 3 and the steering device 4 are controlled according to the driving manipulation by the driver.

As above, the vehicle driving support system 1 can control the engine 2, the brake device 3 and the steering device 4 so as to enable the vehicle 41 to travel along the target traveling course corresponding to the current driving support mode, thereby supporting the driving manipulation by the driver.

### < Collision Avoidance Support Processing Process >

Next, with reference to FIGS. 8 and 9, the collision avoidance support processing process to be executed by the ECU 18 approximately concurrently with the driving support processing process will be described. Here, the collision avoidance support processing process is performed by acquiring the variety of information temporarily stored during the driving support processing process.

Upon start of the collision avoidance support processing process, the ECU 18 operates to determine, based on the vehicle forward side information acquired through the driving support processing process, whether or not an obstacle (e.g., the parked vehicle 43 located on the branch road 37 (see FIG. 7)) is detected ahead of the vehicle 41, e.g., within the range of 200 m from the vehicle 41 (S201).

When no obstacle is detected ahead of the vehicle 41 (S201: NO), the ECU 18 operates to, in a situation where alert notification using an alert sound is not started, maintain the stopped state of the sound-based alert notification, and, in a situation where the sound-based alert notification has been started, stop the sound-based alert notification (S202), and to stand ready to start the processing until an obstacle is detected.

On the other hand, when an obstacle is detected ahead of the vehicle 41 (S201: YES), the ECU 18 operates to start relative relationship information acquisition processing (S203) to acquire relative relationship information indicative of a relative distance and a relative speed with respect to the obstacle. In this process, the ECU 18 operates to calculate the relative distance and the relative speed between the vehicle 41 and the obstacle, based on the traveling behavior information and the obstacle information acquired through the driving support processing process in FIG. 6.

Subsequently, the ECU 18 operates to start TTC calculation processing of calculating, based on the relative distance and the relative speed between the vehicle 41 and the obstacle, a time-to-collision (hereinafter referred to as "TTC") which is a remaining time period before collision (S204). Here, the TTC is a value obtained by dividing the relative distance between the vehicle 41 and the obstacle by the relative speed between the vehicle 41 and the obstacle.

After completion of the TTC calculation processing, the ECU 18 operates to start alert notification start-setting time period acquisition processing of acquiring an alert notification start-setting time period for starting the sound-based alert notification with respect to collision so as to prompt the driver to avoid a collision against the obstacle (S205). That is, when the TTC becomes equal to or less than the alert notification start-setting time period, the sound-based alert notification is started. In this process, the ECU 18 operates to refer to a preliminarily stored map (not illustrated) indicative of a relationship between the vehicle speed and the alert notification start-setting time period, and acquire a value of the alert notification start-setting time period according to a current value of the vehicle speed.

Subsequently, the ECU 18 operates to start reference traveling course setting processing of setting a reference traveling course L (S206; FIG. 9). After start of the reference traveling course setting processing, as shown in FIG. 9, the ECU 18 operates to determine, based on the road shape information acquired through the driving support processing process, whether or not the left lane 34 in which the vehicle 41 is traveling is detected (S231).

When the left lane 34 is detected (S231: YES), the ECU 18 operates to set the first target traveling course L1 as the reference traveling course L (S232). Further, the ECU 18 operates to set a preliminarily stored first threshold, as a threshold for a difference D between the predicted traveling course L3 and the reference traveling course L (see FIG. 10) (S233), whereafter the ECU 18 operates to complete the reference traveling course setting processing, and return the processing flow to the step S206. In FIG. 10, the difference D is a lateral (widthwise) deviation or distance (m) between the two courses.

Here, the first threshold is a threshold to be applied when the first target traveling course L1 is set as the reference traveling course L, and is set to, e.g., ± 0.8 m.

On the other hand, when no left lane is detectable (S231: NO), the ECU 18 operates to determine whether or not the preceding vehicle 42 is detected (S234). When no preceding vehicle is detectable (S234: NO), the ECU 18 operates to set the first target traveling course L1 as the reference traveling course L (S232), and set the first threshold as the threshold for the difference D (S233), whereafter the ECU 18 operates to complete the reference traveling course setting processing, and return the processing flow to the step S206.

On the other hand, in the step S234, when the preceding vehicle 42 is detected (S234: YES), the ECU 18 operates to set the second target traveling course L2 as the reference traveling course L (S235). Further, the ECU 18 operates to set a preliminarily stored second threshold, as a threshold for a difference D between the predicted traveling course L3 and the reference traveling course L (see FIG. 10) (S236), whereafter the ECU 18 operates to complete the reference traveling course setting processing, and return the processing flow to the step S206.

Here, the second threshold is a threshold to be applied when the second target traveling course L2 is set as the reference traveling course L, and is set to a value, e.g., ± 0.5 m, which is less than the first threshold.

After returning to the step S206 to complete the reference traveling course setting processing, the ECU 18 operates to determine, based on the sensor signals acquired from the steering angle sensor 11, the accelerator sensor 12, and the brake sensor 13, whether or not the driving manipulation by the driver has been detected within latest 1 second (S207). Here, examples of the driving manipulation by the driver include a manipulation for returning the accelerator pedal, a manipulation for depressing the brake pedal, and a manipulation for steering the steering wheel.

When the driving manipulation by the driver has been detected within latest 1 second (S207: YES), the ECU 18 operates to determine that the driver visually recognizes the obstacle, and starts a driving manipulation for avoiding a collusion against the obstacle. Subsequently the ECU 18 operates to start threshold correction processing of increasing the threshold for the difference D (see FIG. 10) between the reference traveling course L and the predicted traveling course L3 by a predetermined value (in this example, 0.2 m) (S208). As one example, in the case where the threshold is ± 0.8 m, when the driving manipulation by the driver has been detected within latest 1 second, the ECU 18 operates to correct the threshold to ± 1.0 m, and set the corrected threshold as a new threshold for the difference D.

After completion of the threshold correction processing, or when the driving manipulation by the driver has not been detected within latest 1 second (S207: NO), the ECU 18 operates to determine whether or not the difference D (see FIG. 10) between the reference traveling course L and the predicted traveling course L3 is equal to or less than the threshold (S209).

When the difference D between the reference traveling course L and the predicted traveling course L3 is equal to or less than the threshold (S209: YES), the ECU 18 operates to start alert notification start-setting time period correction processing of delaying the start timing of the alert notification by a given time period, irrespective of the vehicle speed (S210). As one example, the ECU 18 operates to delay the start timing of the alert notification by 1 second.

After completion of the alert notification start-setting time period correction processing, or when the difference D between the reference traveling course L and the predicted traveling course L3 is greater than the threshold (S209: NO), the ECU 18 operates to determine whether or not the TTC is equal to or less than the alert notification start-setting time period (S211). If the TTC is equal to or less than the alert notification start-setting time period (S211: YES), the ECU 18 operates to start collision avoidance control signal output processing of outputting a control signal for collision avoidance (S212).

Specifically, the ECU 18 operates to output the alert notification signal to the speaker 5, thereby starting the sound-based alert notification. Subsequently, the ECU 18 operates to return the processing flow to the step S201, and repeat the processing of the steps S201 to S212 until the engine 2 is stopped.

In the above processing flow, in a situation where the obstacle is continuously detected in the step S201, and the sound-based alert notification has been started, when the TTC reaches a given time period which requires starting braking, the ECU 18 operates to output a control signal for reducing the output of the engine 2 and a control signal for starting breaking, respectively, to the engine 2 and the brake device 3.

Further, based on the road shape information, the traveling behavior information and the obstacle information, the ECU 18 operates to output a control signal for maintaining the steering angle, or changing the steering angle so as to avoid the obstacle, to the steering device 4.

As one example, in a situation where the alert notification start-setting time period acquired in the step S205 is 4.0 seconds, and the difference D between the reference traveling course L and the predicted traveling course L3 is greater than the threshold (S209: NO), the ECU 18 operates to, when the TTC reaches 4.0 seconds (S211: YES), output the alert notification signal to the speaker 5, as shown in FIG. 11(a), thereby starting the sound-based alert notification.

Then, when the TTC reaches 2.3 seconds, the ECU 18 operates to output an on-off signal (specifically, off signal) for closing the throttle valve of the engine 2, to the engine 2, and output the brake signal for starting braking, to the brake device 3, thereby starting breaking by the brake device 3.

As another example, in a situation where the alert notification start-setting time period acquired in the step S205 is 4.0 seconds, and the difference D between the reference traveling course L and the predicted traveling course L3 is equal to or less than the threshold (S209: YES), the ECU 18 operates to correct the alert notification start-setting time period from 4.0 seconds to 3.0 seconds to delay the start timing of the alert notification by 1 second, through the alert notification start-setting time period correction processing (S210).

Then, as shown in FIG. 11(b), when the TTC reaches 3.0 seconds (S211; YES), the ECU 18 operates to output the alert notification signal to the speaker 5, thereby starting the sound-based alert notification. Then, when the TTC reaches 2.3 seconds, the ECU 18 operates to output the on-off signal (specifically, off signal) for closing the throttle valve of the engine 2, to the engine 2, and output the brake signal for starting braking, to the brake device 3, thereby starting breaking by the brake device 3.

On the other hand, when a current value of the TTC does not reach the alert notification start-setting time period (S211: NO), the ECU 18 operates to return the processing flow to the step S201, while skipping the collision avoidance control signal output processing (S212), and repeat the processing of the steps S201 to S212 until the engine 2 is stopped.

The vehicle driving support system 1 realizing the above operations can reliably suppress unwanted alert notification using an alert sound, without impairing a desired collision avoidance support function for supporting a driver to avoid a collision against an obstacle existing ahead of a vehicle.

Specifically, the first target traveling course L1 is a traveling course which allows the vehicle 41 to maintain traveling within the left road 34. Thus, the first target traveling course L1 is not likely to be a dangerous course which causes the vehicle 41 to collide against a parked vehicle existing within the left lane 34, or a dangerous course which causes the vehicle 41 to travel beyond the demarcation line 35.

On the other hand, the second target traveling course L2 is a traveling course which allows the vehicle 41 to follow the traveling trajectory of the preceding vehicle 42. Thus, in a case where there is a parked vehicle ahead of the preceding vehicle 42, the second target traveling course L2 is highly likely to be a safe traveling course which allows the vehicle 41 to avoid a collision against the parked vehicle.

In the vehicle driving support system 1, by calculating the difference D between the reference traveling course L (the first target traveling course L1 or the second target traveling course L2) and the predicted traveling course L3, it is possible to easily determine whether or not the predicted traveling course L3 approximately follows the reference traveling course L which is highly likely to be a relatively safe traveling course.

That is, in the vehicle driving support system 1, if the difference between the reference traveling course L and the predicted traveling course L3 is sufficiently small when an obstacle lying ahead of the vehicle is detected, it can be easily determined that the vehicle is traveling to approximately follow a relatively safe traveling course.

As one example, assume a situation where the reference traveling course L is a traveling course along the left lane 34 (the first target traveling course L1), and a parked vehicle is located on the branch road 37, wherein the vehicle 41 is being driven to travel along the left lane 34 according to the driving manipulation by the driver. In this situation, as long as the difference D between the reference traveling course L and the predicted traveling course L3 is equal to or less than the threshold, even when the parked vehicle located on the branch road 37 is detected as an obstacle, it can be easily determined that a collision risk is low.

As above, in the vehicle driving support system 1, a determination of whether or not the start timing of the alert notification using the alert sound should be delayed can be adequately made based on the reference traveling course L and the predicted traveling course L3. Further, the sound-based alert notification is not cancelled. Thus, at the delayed timing, the vehicle driving support system 1 can immediately start the sound-based alert notification as long as the obstacle is still detected ahead of the vehicle.

Therefore, the collision avoidance support system 1 can reliably suppress unwanted sound-based alert notification, without impairing a desired collision avoidance support function for supporting the driver to avoid a collision against an obstacle existing ahead of the vehicle.

In the above embodiment, the first target traveling course L1 is calculated such that it allows the vehicle 41 to travel along a widthwise approximate middle of the left lane 34 on which the vehicle 41 is located, so that the vehicle driving support system 1 can calculate a safer traveling course within the left lane 34. Thus, in the vehicle driving support system 1, the determination of whether or not the start timing of the sound-based alert notification should be delayed can be adequately made based on the safer first target traveling course L1 and the predicted traveling course L3.

In a case where, differently from the above embodiment, the first target traveling course L1 is not sequentially calculated in a certain one of the driving support modes, during transition from the certain driving support mode which does not involve the calculation of the first target traveling course to one of the remaining driving support modes involving the calculation of the first target traveling course, it is unable to promptly calculate a lane in which the vehicle is located, so that it takes time for calculating the first target traveling course, and a load of a CPU or the like is likely to increase.

Compared with this, in the above embodiment, the first target traveling course L1 is sequentially calculated, irrespective of the driving support mode selected by the driver. Thus, in the vehicle driving support system 1, e.g., even when the driving support mode is switched, the first target traveling course L1 can be calculated seamlessly, and can be obtained with a higher degree of accuracy.

Further, e.g., even in a situation where the demarcation line 35 or the safety barrier 36 for identifying a lane is intermittently discontinued, the vehicle driving support system 1 can easily calculate the first target traveling course L1, based on information just before the discontinuity, and a current traveling behavior of the vehicle 41.

Thus, the vehicle driving support system 1 can calculate the first target traveling course L1 more reliably and seamlessly, while suppressing the load of the CPU or the like. For this reason, in the vehicle driving support system 1, the determination of whether or not the start timing of the alert notification using the alert sound should be delayed can be adequately made based on the first target traveling course L1 and the predicted traveling course L3.

Therefore, in the vehicle driving support system 1, by sequentially calculating the first target traveling course L1, the sound-based alert notification can be started at a more adequate timing, when an obstacle is detected ahead of the vehicle. This makes it possible to more reliably suppress unwanted sound-based alert notification.

Further, one of the first target traveling course L1 and the second target traveling course L2 is set as the reference traveling course L, based on the driving support mode, detectability of the lane, and detectability of the preceding vehicle, so that the vehicle driving support system 1 can more safely suppress unwanted sound-based alert notification.

Specifically, in a situation where the left lane 34 on which the vehicle 41 is located can be detected continuingly, the safety of the first target traveling course L1 is likely to become higher as compared to a situation where the light lane 34 cannot be detected continuingly. Similarly, in a situation where the traveling trajectory of the preceding vehicle 42 can be detected continuingly, the safety of the second target traveling course L2 is likely to become higher as compared to a situation where the traveling trajectory of the preceding vehicle 42 cannot be detected continuingly.

On the other hand, the driving support mode selected by the driver can require, e.g., detection of the left lane 34 on which the vehicle 41 is located, or detection of the preceding vehicle 42. Thus, the safety of traveling in the driving support mode selected by the driver is likely to be influenced by detectability of the lane or detectability of the preceding vehicle.

In view of this, one of the first target traveling course L1 and the second target traveling course L2 is set as the reference traveling course L, based on the driving support mode selected by the driver, detectability of the lane, and detectability of the preceding vehicle, so that it is possible to set the reference traveling course L with higher safety.

Therefore, in the vehicle driving support system 1, the determination of whether or not the start timing of the alert notification using the alert sound should be delayed can be made safely and more adequately based on the safer reference traveling course L.

As above, in the vehicle driving support system 1, the reference traveling course L is set based on the driving support mode selected by the driver, detectability of the demarcation line 35, and detectability of the preceding vehicle 42, so that it is possible to more safely suppress unwanted sound-based alert notification.

Further, the threshold is set to a larger value (first threshold) when the first target traveling course L1 which allows the vehicle 41 to travel along the widthwise approximate middle of the left lane 34 is set as the reference traveling course L than that (second threshold) when the second target traveling course L2 is set as the reference traveling course L, so that the vehicle driving support system 1 can more reliably suppress unwanted sound-based alert notification, without impairing a desired collision avoidance support function.

For example, in a case where there is a parked vehicle ahead of the preceding vehicle 42, the second target traveling course L2 is highly likely to be a safe traveling course which allows the vehicle 41 to avoid a collision against the parked vehicle. However, the safety of the second target traveling course L2 largely relies on judgment of a driver who performs the driving manipulation of the preceding vehicle 42. Thus, even though the second target traveling course L2 is a traveling course which allows the vehicle to avoid a collision against the obstacle, it is likely not to be a traveling course whose distance from the obstacle is sufficiently ensured, or a traveling course which does not go beyond the demarcation line 35.

That is, in terms of a possibility of a collision against the obstacle, the first target traveling course L1 which allows the vehicle to travel along the widthwise approximate middle of the left lane 34 can be lower than the second target traveling course L2 which allows the vehicle 41 to follow the traveling trajectory of the preceding vehicle 42.

For this reason, as compared with when the second target traveling course L2 is set as the reference traveling course L, a risk of a collision against the obstacle (e.g., a parked vehicle or an oncoming vehicle) becomes lower when the first target traveling course L1 which allows the vehicle 41 to travel along the widthwise approximate middle of the left lane 34 is set as the reference traveling course L, even if the difference D between the reference traveling course L and the predicted traveling course L3 is somewhat large.

Thus, the threshold is set to a larger value when the first target traveling course L1 is set as the reference traveling course L than when the second target traveling course L2 is set as the reference traveling course L, so that it is possible to more reliably suppress unwanted sound-based alert notification.

Therefore, when the first target traveling course L1 which allows the vehicle 41 to travel along the widthwise approximate middle of the left lane 34 is set as the reference traveling course L, the threshold is set to a larger value, so that the vehicle driving support system 1 can more reliably suppress unwanted sound-based alert notification, without impairing a desired function of the system.

As one example, when the driving support mode selected by the driver is the preceding vehicle following mode, and the second target traveling course L2 is set as the reference traveling course L, the threshold is set to a smaller value than the first threshold set when the first target traveling course L1 is set as the reference traveling course L. Thus, the vehicle driving support system 1 can more strictly determine followability of the vehicle with respect to the preceding vehicle 42.

When the driving support mode selected by the driver is the preceding vehicle following mode, traveling according to the driving support is performed to avoid a collision against an obstacle lying ahead of the vehicle, along the traveling trajectory of the preceding vehicle 42.

In view of this, when the preceding vehicle following mode is selected, followability of the predicted traveling course L3 with respect to the second target traveling course L2 is more strictly determined. Thus, the vehicle driving support system 1 can more strictly determine whether or not there is a possibility of deviating from a traveling course capable of safely avoiding a collision against the obstacle.

Thus, in the vehicle driving support system 1, the determination of whether or not the start timing of the sound-based alert notification should be delayed can be more adequately made, so that it is possible to prevent erroneous suppression of the start of required sound-based alert notification.

Therefore, the vehicle driving support system 1 can satisfy both the prevention of erroneous suppression of required sound-based alert notification, and the suppression of unwanted sound-based alert notification.

In the vehicle driving support system 1, when the driving manipulation by the driver is detected within latest 1 second, the threshold is set to a larger value, thereby further delaying the start timing of the sound-based alert notification.

Thus, when the driver visually recognizes an obstacle lying ahead of the vehicle 41 and then starts the avoidance action for avoiding a collision against the obstacle, the vehicle driving support system 1 can further suppress unwanted sound-based alert notification.

Therefore, the vehicle driving support system 1 can suppress start of the sound-based alert notification in a situation where the driver performs the driving manipulation for avoiding a collision against the obstacle, and prevent giving the driver a feeling of strangeness or a discomfort feeling.

Specifically, the vehicle driving support system 1 can further suppress unwanted sound-based alert notification by setting the threshold to a larger value when the driver's driving manipulation is detected within latest 1 second.

Each of the elements corresponds to a respective one of the following elements in the above embodiment.

The "vehicle" recited in the appended claims corresponds to the vehicle 41 in the above embodiment. In the same manner, the "obstacle" corresponds to the parked vehicle 43. The "collision avoidance support" corresponds to the sound-based alert notification. The "given timing" corresponds to the start timing set by the alert notification start-setting time period. The "collision avoidance support part" corresponds to a combination of the speaker 5 and the ECU 18. Each of the "preceding vehicle detection part" and the "obstacle detection part" corresponds to a combination of the vehicle-mounted camera 6, the millimeter-wave radar 7 and the ECU 18. The "traveling road" corresponds to the left lane 34. Each of the "target traveling course calculation part", the "second target traveling course calculation part", the "predicted traveling course calculation part" and the "reference traveling course setting part" corresponds to the ECU 18. The "given condition" corresponds to each of the driving support mode, detectability of the demarcation line 35, and detectability of the preceding vehicle 42. The "given value" corresponds to the threshold.

The "driving support mode" corresponds to each of the preceding vehicle following mode, the automatic speed control mode, the speed limiting mode, and the basic control mode. The "support mode selection part" corresponds to driving support mode selection unit 16. The "traveling road detection part" corresponds to a combination of the vehicle-mounted camera 6 and the ECU 18. The "driving support mode for supporting a driving manipulation by the driver to follow the traveling trajectory of the preceding vehicle" corresponds to the preceding vehicle following mode. The "given value", set when the target traveling course is set as the reference traveling course, corresponds to the first threshold. The "given value", set when the second target traveling course is set as the reference traveling course, corresponds to the second threshold. The "avoidance action detection part" corresponds to a combination of the steering angle sensor 11, the accelerator sensor 12, the brake sensor 13, and the ECU 18.

It is to be understood that the present invention is not limited to the configuration of the above embodiment, but various changes and modifications may be made therein.

For example, the above embodiment has been described based on an example where the first target traveling course L1 is a course passing through the widthwise approximate middle of the left lane 34. Alternatively, the first target traveling course L1 may be any course which allows the vehicle 41 to maintain traveling within the left lane 34.

Further, the collision avoidance support to be started at the given timing is not limited to the sound-based alert notification, but may be breaking by the brake device 3 or steering by the steering device 4.

Further, the driving support mode is not limited to each of the preceding vehicle following mode, the automatic speed control mode, the speed limiting mode, and the basic control mode, but may be any other appropriate driving support mode as long as it is capable of supporting the driving manipulation by the driver.

Further, the road state identification processing (S103) in FIG. 6 is configured such that, during acquisition of the obstacle information, a parked vehicle or pedestrian existing ahead of and within the range of about 200 m from the vehicle 41 is identified as an obstacle. Alternatively, the range in which an obstacle is identified may be the range of any other appropriate distance, or may be changed depending on the vehicle speed.

Further, the threshold for the difference D between the reference traveling course L and the predicted traveling course L3 is not limited to ± 0.8 m or ± 0.5 m, but may be set to any other appropriate value according to the vehicle speed, the road-width W, and/or the vehicle-width CW. As one example, when the road-width W is up to 3.0 m, the threshold may be set to ± 0.8 m, and, when the road-width W is greater than 3.0 m, the threshold may be set to ± 1.0 m.

Further, in the step S207 in FIG. 8, it is determined whether or not the driving manipulation by the driver has been detected within latest 1 second. Alternatively, it may be determined whether or not the driving manipulation by the driver has been detected within latest several seconds, or whether the driving manipulation by the driver has been detected within latest appropriate time period set according to the vehicle speed or the like.

Further, the driving manipulation by the driver which has been detected within latest 1 second is not limited to the manipulation for returning the accelerator pedal, the manipulation for depressing the brake pedal, or the manipulation for steering the steering wheel, but may include a manipulation for avoiding a collision against an obstacle (e.g., a preliminary manipulation by the driver to change the traveling behavior of the vehicle 41). For example, the above driving manipulation may include a manipulation of a winker lever performed before the accelerator pedal, the brake pedal or the steering wheel is manipulated.

Further, when the driving manipulation by the driver is determined, in the step S207 in FIG. 8, to have been detected within latest 1 second, the threshold is corrected, e.g., from ± 0.8 m to ± 1.0 m (increment: 0.2 m), in the step S208. Alternatively, the increment of the threshold may be appropriately set.

Further, the alert notification start-setting time period acquired through the alert notification start-setting time period acquisition processing (S205) is, e.g., 4.0 seconds, and the start timing set by the alert notification start-setting time period is delayed by 1 second through the alert notification start-setting time period correction processing (S210) in FIG. 8. Further, through the collision avoidance control signal output processing (S212) in FIG. 8, breaking is started when the TTC is, e.g., 2.3 seconds. Alternatively, each of the alert notification start-setting time period, a delay time period for the start timing set by the alert notification start-setting time period, and the TTC for starting breaking may be set to an appropriate time period according to the vehicle speed or the like.

Further, the collision avoidance support processing process in FIG. 8 includes the reference traveling course setting processing (S206). Alternatively, the collision avoidance support processing process does not need to include this processing. In this case, irrespective of detectability of the lane and detectability of the preceding vehicle, the first target traveling course L1 may be used as the reference traveling course L, and the first threshold may be used as the threshold. Thus, in the "reference traveling course" field of the traveling course map 19 in FIG. 2, only the first target traveling course L1 is registered.

### LIST OF REFERENCE SIGNS

- 1:: vehicle driving support system
- 5:: speaker
- 6:: vehicle-mounted camera
- 7:: millimeter-wave radar
- 11:: steering angle sensor
- 12:: accelerator sensor
- 13:: break sensor
- 16:: driving support mode selection unit
- 18:: ECU
- 34:: left lane
- 41:: vehicle
- 42:: preceding vehicle
- 43:: parked vehicle
- D:: difference between reference and predicted traveling courses
- L:: reference traveling course
- L1:: 1st target traveling course
- L2:: 2nd target traveling course
- L3:: predicted traveling course

## Claims

1. A vehicle driving support system comprising:
an obstacle detection part configured to detect an obstacle located ahead of a vehicle; and
a collision avoidance support part configured to, when the obstacle detection part detects the obstacle, start collision avoidance support for avoiding a collision against the obstacle at a given timing,
wherein the vehicle driving support system further comprises:
a target traveling course calculation part configured to calculate a target traveling course which allows the vehicle to maintain traveling within a traveling road on which the vehicle is located; and
a predicted traveling course calculation part configured to calculate a predicted traveling course based on a current traveling behavior of the vehicle,
wherein the collision avoidance support part is configured to delay the given timing when a difference between the target traveling course and the predicted traveling course is equal to or less than a given value.

2. A vehicle driving support system comprising:
an obstacle detection part configured to detect an obstacle located ahead of a vehicle; and
a collision avoidance support part configured to, when the obstacle detection part detects the obstacle, start collision avoidance support for avoiding a collision against the obstacle at a given timing,
wherein the vehicle driving support system further comprises:
a preceding vehicle detection part configured to detect a preceding vehicle which is traveling ahead of the vehicle;
a target traveling course calculation part configured to calculate a target traveling course which allows the vehicle to maintain traveling within a traveling road on which the vehicle is located;
a second target traveling course calculation part configured to calculate a second target traveling course which allows the vehicle to follow a traveling trajectory of the preceding vehicle;
a predicted traveling course calculation part configured to calculate a predicted traveling course based on a current traveling behavior of the vehicle; and
a reference traveling course setting part configured to set, as a reference traveling course, one of the target traveling course and the second target traveling course according to a given condition,
wherein the collision avoidance support part is configured to delay the given timing when a difference between the reference traveling course and the predicted traveling course is equal to or less than a given value.

3. The vehicle driving support system as recited in claim 1 or 2, wherein the target traveling course calculation part is configured to calculate the target traveling course such that it allows the vehicle to travel along a widthwise approximate middle of the traveling road on which the vehicle is located.

4. The vehicle driving support system as recited in any one of claims 1 to 3, further comprising a support mode selection part configured to accept a selection manipulation by a driver to select one of a plurality of driving support modes each for supporting a driving manipulation by the driver,
wherein the target traveling course calculation part is configured to sequentially calculate the target traveling course, irrespective of the driving support mode selected by the driver.

5. The vehicle driving support system as recited in claim 2, further comprising:
a support mode selection part configured to accept a selection manipulation by a driver to select one of a plurality of driving support modes each for supporting a driving manipulation by the driver; and
a traveling road detection part configured to detect the traveling road on which the vehicle is located,
wherein the given condition includes: the driving support mode selected by the driver; detectability of the traveling road; and detectability of the preceding vehicle, and
wherein the reference traveling course setting part is configured to set, as the reference traveling course, one of the target traveling course and the second target traveling course, based on the driving support mode selected by the driver, detectability of the traveling road, and detectability of the preceding vehicle.

6. The vehicle driving support system as recited in claim 2 or 5, wherein the target traveling course calculation part is configured to calculate the target traveling course such that it allows the vehicle to travel along a widthwise approximate middle of the traveling road on which the vehicle is located, and
wherein the given value is set to a larger value when the target traveling course is set as the reference traveling course than when the second target traveling course is set as the reference traveling course.

7. The vehicle driving support system as recited in claim 5 or 6, wherein, when the driving support mode selected by the driver is a driving support mode for supporting a driving manipulation by the driver to follow the traveling trajectory of the preceding vehicle, and the second target traveling course is set as the reference traveling course, the given value is set to a smaller value than when the target traveling course is set as the reference traveling course.

8. The vehicle driving support system as recited in any one of claims 1 to 7, further comprising an avoidance action detection part configured to detect an avoidance action by the driver to avoid the collision against the obstacle,
wherein the collision avoidance support part is configured to increase the given value when the avoidance action detection part detects the avoidance action by the driver.
